(19) **Europäisches Patentamt / European Patent Office / Office européen des brevets**

(11) **EP 4 764 823 A1**

(12) **EUROPEAN PATENT APPLICATION**

(43) Date of publication:
24.06.2026 Bulletin 2026/26

(21) Application number: 24222030.9

(22) Date of filing: 20.12.2024

(51) International Patent Classification (IPC):
*G06F 7/58* $^{(2006.01)}$

(52) Cooperative Patent Classification (CPC):
G06F 7/588

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Imec VZW**
**3001 Leuven (BE)**

(72) Inventors:
• **GARCIA REDONDO, Fernando**
**Cambridge CB43NG (GB)**
• **GAMAGE, Sahan**
**Cambridge CB1 8NJ (GB)**
• **MYERS, James Edward**
**Great Wibraham CB21 5JD (GB)**

(74) Representative: **Winger**
**Mouterij 16 bus 101**
**3190 Boortmeerbeek (BE)**

(54) **RECONFIGURABLE P-BIT SAMPLING HARDWARE**

(57)     A hardware random number generator (HW-RNG) and related method are disclosed. The HW-RNG comprises a sample generation stage, adapted to produce primary samples from a plurality of primitive probability distributions, a sample processing stage and a control unit. The sample generation stage includes sets of programmable p-bit devices, a programming unit to adjust the mean values for each set of p-bit devices, and a distinct sampling circuit for each set of p-bit devices. The sample processing stage comprises function logic blocks and selection circuitry configured to route at least one subset of the primary samples to a corresponding function logic block. The control unit is configured to obtain information relating to a composition of basis distributions representative of a target distribution, instruct the function logic block to perform at least arithmetic operation identified by the information, instruct the programming unit to program the sets of p-bit devices according to the composition of basis distributions, and generate the select signal to operatively couple the function logic block to sampling circuits that produce primary samples of random variables defined by the composition of basis distributions.

FIG. 1

Processed by Luminess, 75001 PARIS (FR)

EP 4 764 823 A1

## Description

### Field of the invention

The present invention generally relates to the field of random number generation and more specifically relates to hardware random number generators that use reconfigurable probabilistic bits (p-bits) as inputs.

### Background of the invention

Various known sampling techniques for arbitrary random variables are software-based and the sample generation for arbitrary random variables relies on the sampling from and the transformation of uniformly distributed random variables. Moreover, most random number generators that sample from uniform distributions are not truly random but deterministic pseudorandom number generators. Popular approaches to sampling from an arbitrary probability distribution are, for example, the inverse sampling transform, rejection-acceptance sampling and algorithms based on Markov chain Monte Carlo. Although software-implemented random number generators for arbitrary probability distributions are available, they are inherently low-throughput. It is therefore desirable to provide dedicated hardware that accelerates and scales the process of random number generation. The rise and success of probabilistic computing calls for efficient sampling hardware that enables random number generation at high throughputs.

Probabilistic bits (p-bits) have been suggested as fundamental building blocks for probabilistic computers. Hardware implemented p-bit arrays harness and exploit the randomness inherent to rapidly fluctuating physical systems, which makes them promising candidates for hardware-built high-throughput random number generators. In P. Debashis, et al. "Gaussian Random Number Generator With Reconfigurable Mean and Variance Using Stochastic Magnetic Tunnel Junctions", IEEE Magnetics Letters, vol. 13, pp. 1-5, 2022, the authors disclose sample generation for a Gaussian probability distribution based on random binary sequences from a network of tunable p-bit generator cells. A disadvantage of the disclosed method is that one can only sample Gaussian distributions.

Probabilistic workloads that benefit from high-throughput p-bit generation range from security system to cryptography, computational statistics, robotics, machine learning and artificial intelligence, meteorology and climate simulations, and many others. With the advent of hardware devices for probabilistic bit generation, the search for hardware-based solutions to the problem of an efficient sampling of arbitrary random variables becomes even more pressing.

Many of these applications require sampling from adaptive probability distributions, probability distributions that are conditional on previous observations, or probability distributions that evolve over time. For instance, annealers often use distributions like Exponential, Boltzmann, Erlang, etc., which depend on a temperature parameter that is progressively lowered according to a temperature anneal schedule, thus requiring the re-computation of the probability distributions from which samples are drawn. This requires reconfigurability of the hardware-implemented p-bit devices, in which the probability values (i.e. the statistical means) associated with these devices are individually reprogrammable. However, frequent reconfigurations of the p-bit hardware introduce delays and reduce the throughput of the random number generator. This is hindering the performance of applications that require continuous and adaptable random number generation.

There is a need for hardware-implemented random number generators that can sustain a high throughput sampling operation in the context of evolving probability distributions to be sampled from.

### Summary of the invention

It is an object of embodiments of the present invention to provide random number generators in hardware that can be reconfigured without causing stalls in the random number generation process.

It is a further object of embodiments of the present invention to provide circuitry that efficiently generates samples from a dynamically evolving target distribution.

The above objective is accomplished by a hardware random number generator and method according to the present invention.

In one aspect, the present invention relates to a hardware random number generator for drawing samples from a target distribution. The hardware random number generator comprises a sample generation stage adapted to produce a plurality of primary samples from a corresponding plurality of primitive probability distributions, a sample processing stage and a control unit. The sample generation stage includes multiple sets of programmable p-bit devices, at least one programming unit and a separate sampling circuit for each set of p-bit devices. The p-bit device of each set is configured to generate individual p-bits according to a statistical mean value, and the programming unit is configured to adjust the statistical mean values associated with each p-bit device of the sets of p-bit devices to match probability values of a respective one of the plurality of primitive probability distributions. Each sampling circuit is configured to choose a p-bit at random among the p-bits generated by the associated set of p-bit devices to produce a respective one of the plurality of primary samples. The sample processing stage comprises a plurality of function logic blocks and selection circuitry. Each function logic block is configured to perform arithmetic operations on a subset of the plurality of primary samples to obtain an output sample from the target distribution. The selection circuitry is configured to route, based on a select signal, at least one subset of the plurality of primary samples from the sample generation stage to a corresponding at least one function logic block of the plurality of function logic blocks. The control unit is configured to: obtain composition information relating to a composition of basis distributions representative of the target distribution, wherein the composition information is identifying at least one arithmetic operation to be performed on random variables defined by the composition of basis distributions; select and instruct at least one function logic block of the processing stage to perform the at least arithmetic operation identified by the composition information; instruct the programming unit to program, in accordance with each basis distribution identified in the composition information, a corresponding one of the sets of p-bit devices, thus adapting the primitive probability distributions to the basis distributions comprised by the composition of basis distributions; and generate the select signal to operatively couple the selected at least one function logic block of the sample processing stage to sampling circuits of the sample processing stage that produce primary samples of random variables defined by the composition of basis distributions, thereby identifying subsets of the plurality of primary samples that are input to the selected at least one function logic block.

In embodiments, the hardware random number generator may further comprise a sample buffer connected between the sample generation stage and the processing stage, the sample buffer being configured to temporarily hold the primary samples produced by the sample generation stage. This improves timing constraint and enables a pipeline architecture of the hardware random number generator in which the sample generation stage is decoupled from the sample processing stage. Moreover, primary samples in the buffer are still available to the sample processing stage even if one of the seeding sets of p-bit devices is undergoing reprogramming.

In embodiments, the sample buffer may have a buffer capacity to hold the primary samples of a number of cycles as least as large as a latency associated with the programming of one of the sets of p-bit devices. This avoids stalling the sample generation during reprogramming.

In embodiments, the sets of p-bit devices, the sampling circuits, the selection circuitry and the function logic blocks may be arranged in different stages of a pipeline, thus allowing different stages of the pipeline to perform work with regard to different output samples in parallel. This has the advantage of increasing the throughput.

In embodiments, the target distribution may evolve dynamically, wherein the control unit is configured to obtain updates to the composition information with respect to the evolving target distribution, determine modifications to the least one arithmetic operation to be performed on the random variables identified in the updates to the composition information, select and instruct one of the function logic block of the sample processing stage to perform said at least one arithmetic operation taking into account said modifications, and regenerate the select signal if another function logic block of the sample processing stage has been selected as a result of said modification.

In embodiments, the target distribution may evolve dynamically, wherein the control unit is configured to obtain updates to the composition information with respect to the evolving target distribution, determine compositional changes with regard to the random variables defined by said composition of basis distributions, select and instruct one of the function logic block of the sample processing stage to perform said at least one arithmetic operation taking into account the changes in the composition of random variables, and regenerate the select signal to operatively couple the selected at least one function logic block of the sample processing stage to sampling circuits of the sample processing stage that produce primary samples of the changed composition of random variables.

In embodiments, the target distribution may evolve dynamically, wherein the control unit is configured to obtain updates to the composition information with respect to the evolving target distribution, identify at least one modified basis distribution in the composition of basis distributions based on the updates to the composition information, and instruct the programming unit to program, in accordance with each modified basis distribution, a corresponding one of the sets of p-bit devices, thus adapting the primitive probability distributions to the modified basis distributions.

In embodiments, the control unit may be configured to update the target distribution in accordance with an annealing schedule.

In embodiments, one or more of the function logic blocks of the processing stage may comprise digital electronic adders and/or multipliers.

In embodiments, the basis distributions may comprise at least one basis distribution selected from the following probability distributions: Binomial, Geometric, Poisson, Normal, Exponential, Erlang, Cauchy, Lévy, Beta, Gamma, Voigt, Chi-square, Rayleigh.

In embodiments, the hardware random number generator may further comprise an output buffer in communication with the processing stage, the output buffer being configured to buffer the output samples.

Embodiments of the invention have the advantage that samples from arbitrary target distributions can be efficiently generated through decomposition of the target distribution into simpler basis distributions. An adaptive decomposition, the ease of recreating subsets of primary samples drawn from the programmed basis distributions, the ease of switching between function logic blocks and the programmability of the sets of p-bit device to adapt to changing composition of basis distributions allows fast reconfiguration of the hardware random number generator in response to dynamic changes of evolving target distributions.

In another aspect, the present invention relates to a method of generating samples from a target distribution. The method comprises the steps of:

providing an ensemble of basis distributions,

providing a plurality of function logic blocks, each configured to perform arithmetic operations on input variables to obtain an output sample from the target distribution,

determining a composition of basis distributions selected from the ensemble of trial basis distributions as an approximation or equivalent to the target distribution, said composition of basis distributions identifying at least arithmetic operations to be performed on random variables defined by the composition of basis distributions,

for each basis distribution participating in said composition of basis distributions, programming a respective set of programmable p-bit devices, including programming a statistical mean value associated with each p-bit device of the set of p-bit devices to match a corresponding probability value of the basis distribution,

for each set of p-bit devices programmed in accordance with one of the basis distributions participating in said composition of basis distributions, generating individual p-bits by the respective p-bit devices of the set of p-bit devices and randomly selecting one of individually generated p-bits using a predetermined sampling algorithm, thus obtaining a primary sample from each basis distribution participating in said composition of basis distributions,

obtaining a subset of the primary samples in accordance with the random variables defined by the composition of basis distributions,

selecting a function block from the plurality of function logic block in accordance with said composition of basis distributions, configuring the selected function logic block to perform the at least one arithmetic operation, and applying the subset of primary samples as input variables to the function block to produce an output sample from the target distribution.

In embodiments, the method may further comprise the steps of:

detecting changes in the target distribution,

determining modifications to the composition of basis distributions to compensate the changes in the target distribution,

reconfiguring the selected function logic block to perform at least one modified arithmetic operation if the modifications to the composition of basis distributions pertains to a modification of the at least one arithmetic operation,

modifying the subset of the primary samples operation if the modifications to the composition of basis distributions pertains to a modification of the random variables defined by the composition of basis distributions.

In embodiments, the method may further comprise:

reprogramming one of the sets of p-bit devices in accordance with a modified basis distribution if the modifications to the composition of basis distributions pertains to a modification of the basis distribution participating in the composition of basis distributions.

The method can be performed by a hardware random number generator in accordance with embodiments of the preceding aspect. The method may be computer-implemented, wherein the method steps are performed by the hardware random number generator modules according to embodiments of the preceding aspect that are incorporated into the computer

It is an advantage of embodiments of the present invention that hardware random number generators can be reconfigured without causing stalls in the random number generation process.

In embodiments, one or more of the basis (probability) distributions contained in the composition of basis distributions can be different or identical.

It is a further advantage of embodiments of the present invention that circuitry can efficiently generate samples from dynamically evolving target distributions, including arbitrary probability distributions of any shape and dimension.

It is an advantage of embodiments of the invention that hardware random number generators can be implemented in standard CMOS technology.

It is an advantage of embodiments of the invention that the random number generator can maintain high throughput even when adapting to changing target distributions, thereby avoiding throughput reductions associated with frequent reconfiguration of p-bit devices.

It is an advantage of embodiments of the invention that reprogramming of p-bit devices can be anticipated by scheduling information or compensated by redundant hardware, thereby avoiding long delays and maintaining high throughput during the entire operation of the hardware random number generator.

It is an advantage of embodiments of the invention that the hardware random number generator efficiently utilizes hardware resources while adapting to changing target distributions without frequent reconfiguration.

It is an advantage of embodiments of the invention that the random number generator can sample from both continuous and discrete probability distributions, and can accommodate combinations thereof.

It is an advantage of embodiments of the invention that the control unit can respond to evolving or adaptive target distributions without stalling the output sample generation process by modifying the selection of or switching between different function logic blocks and modifying the selection of primary samples that contribute to the inputs of selected function logic blocks.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

## Brief description of the drawings

The invention will now be described further, by way of example, with reference to the accompanying drawings, in which:

Fig. 1 is a block diagram of a hardware random number generator (HW-RNG) according to embodiments of the present invention.

Fig. 2 illustrates the programming of a primitive probability distribution through adjustment of the expectation values of the corresponding set of p-bit devices according to embodiments of the present invention.

Fig. 3 is a block diagram of an exemplary sampling circuit that can be used in the sample generation stage of HW-RNGs according to embodiments of the present invention.

Fig. 4 is a circuit diagram of an exemplary selector circuit that can be used in sampling circuits of HW-RNGs according to embodiments of the present invention.

Fig. 5 is a circuit diagram of an exemplary detection unit related to a level-three depth stage of the binary selection tree structure according to embodiments of the present invention.

Fig. 6 illustrates the steps of a random number generation method using the HW-RNG according to embodiments of the present invention.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

## Detailed description of illustrative embodiments

The present invention will be described with respect to particular embodiments and certain drawings, but the invention is not limited thereto but only by the claims.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some, but not other features included in other embodiments, combinations of features of different embodiments are meant to be within the scope of the invention, and form different embodiments, as would be understood by those in the art.

In the description provided herein, numerous specific details are set forth. However, it is understood that embodiments of the invention may be practiced without these specific details. In other instances, well-known methods, structures and techniques have not been shown in detail in order not to obscure an understanding of this description.

When reference is made to the height of a tree node, this refers to the smallest number of edges that connect the tree node in question to one of the leaf nodes of the binary tree. The height of the binary tree refers to the height of the root node of the binary tree.

When reference is made to the depth of a tree node, this refers to the smallest number of edges that connect the tree node in question to the root node of the binary tree. Depth stages are associated with the set of tree nodes that have the same node depth. The depth stages of the binary tree are enumerated by increasing levels of node depth, starting with the root node as the only tree node in level-zero depth stage.

A perfect binary tree is a binary tree in which all non-leaf nodes have exactly two children and the leaf nodes all have maximum depth.

In one aspect, the invention relates to a hardware random number generator (HW-RNG) for drawing sampling from a target distribution. The target distribution, in embodiments of the invention, refers to the probability distribution of interest, or an approximation thereof, from which samples are to be drawn. The target distribution can be arbitrary, e.g. arbitrary in shape and in the number of dimensions. In embodiments of the invention, the target distribution may be probability mass function (pmf), a probability density function (pdf), or a combination of both, depending on the discrete or continuous nature of the random variables involved in the target distribution. For instance, a random vector composed of both discrete and continuous random variables may be defined by a probability distribution that is discrete (pmf) in some variables and continuous (pdf) in other variables. Numerically, a continuous random variable and associated pdf can be approximated by a discrete random variable and associated pmf. Multivariate target distributions can be derived from the joint probability distribution function of a multi-dimensional random vector. It is also possible that the target distribution corresponds to the cumulative distribution function, conditional or marginal distributions, or other distribution functions derivable from or related to the pdf or pmf. Samples generated by the hardware device are true random numbers, meaning that the device belongs to the class of physical or hardware random number generators (RNGs).

Contrary to conventional RNGs, e.g. software-implemented RNGs, for which output samples are constructed from pseudorandom number, the hardware device according to the invention uses hardware generated p-bits as probabilistic inputs. Here probabilistic inputs designate the uncertain and randomly fluctuating inputs or input signals of the device as opposed to deterministic inputs (e.g. variables that are known, can be read from memory or computed without uncertainty). The HW-RNG according to embodiments of the invention can be a digital electronic circuit, digital integrated circuit, device or component that can be readily integrated into a larger probabilistic computer, probabilistic accelerator, or from part of a wider system-on chip (SoC).

As opposed to classical bits, which have a well-defined logical state (i.e., either true or false) for computational purposes, probabilistic bits (p-bits) are rapidly fluctuating classical bits that have the capability of emulating non-deterministic aspects on classical digital hardware. Large numbers of p-bits can be arranged into p-bit arrays or sets and coupled to form p-bit networks as a powerful computational resource, e.g. in the form of a coprocessor. Moreover, digital circuits can be specifically adapted to process p-bits.

For computation time spans larger than the autocorrelation lifetime of the p-bit, which depends on its physical device implementation, the rapid fluctuations average out to a deterministic value, i.e. the expectation value (also referred to as statical mean or average) for the series of random transitions associated with the p-bit operation. The current state of the fluctuating p-bit device can be detected at a particular moment in time, such as at regular time intervals, to obtain a realization of the p-bit (also called observation or sample). Each realization indicates either a logical HIGH or a logical LOW state of the p-bit. The two states (i.e. LOW or HIGH) are realized with different probabilities, e.g. $P(LOW) = p$ and $P(HIGH) = 1-p$, where 'p' designates the average or expectation of the random trials. This expectation value is typically a control variable for the operation of a p-bit device, meaning that the p-bit device itself or auxiliary circuitry is comprising a control means for tuning the expectation value associated with the p-bit. Tunable probabilistic bit generators based on magnetic tunnel junction stacks formed over an SOT track (spin orbit torque) have been described, e.g., in P. Debashis, et al. "Gaussian Random Number Generator With Reconfigurable Mean and Variance Using Stochastic Magnetic Tunnel Junctions", IEEE Magnetics Letters, vol. 13, pp. 1-5, 2022. Therein, the SOT current influences the random switching behavior of the magnetoresistance of the MJT stack.

The HW-RNG in accordance with embodiments of the invention includes a sample generation stage and a sample processing stage. The former is adapted to produce primary samples in the sense of initial, original or primitive samples that have not yet undergone further transformation, whereas the latter is adapted to select among the primary samples and subject them to a transformation operation to produce processed samples as output samples from the target distribution. The primary samples are drawn with respect to a set of primitive probability distributions which form the basis for the construction of more complex or dynamically evolving (e.g. adaptive) probability distributions by transformation and/or composition of selected ones of the primitive probability distributions. For many probability distributions of practical relevance, the transformation and/or composition operations for the selected primitive probability distributions can be translated into a sequence of one or more elementary arithmetic operations (e.g. addition and subtraction, multiplication and division) on the corresponding random variables. Indeed, there are many parametric families of probability distributions in which arithmetic operations such as sums, differences, multiplications and divisions of random variables belonging to the same or a related parametric family result in another random variable whose probability distribution also falls within the same or related parametric family. A typical example is the linear combination transformation of Gaussian-distributed random variables, which yields another Gaussian-distributed random variable. Other examples include binomial distribution, exponential distribution, Erlang distribution, Cauchy distribution, etc.

More generally, the probability distribution of a sum of random variables is obtained by convolution of the corresponding probability density functions as composition operation. Similarly, the product and quotient distribution pdf(z) for the product $Z = X*Y$ and quotient $Z = X/Y$ of two independent random variables X and Y, respectively, can be derived from the corresponding probability density functions pdf(x) and pdf(y) and can often be expressed by a probability distribution of a known standard family. For instance, the quotient distribution for two Gaussian-distributed random variables of mean zero is a Cauchy-distributed random variable and the product or quotient of two log-normal distributed random variables is again a log-normal distributed random variable. Less frequently used and seldomly used probability distributions can be approximated by a probability distribution belonging to one of the standard families or combinations thereof, e.g. compositions of random variables whose probability distributions belong to standard families using the elementary algebraic operations of addition, subtraction, multiplication, division and, by extension, also exponentiation and logarithm.

Therefore, the target distribution or changes to the target distribution can be represented, exactly or in approximate form, as the constructed probability distribution of algebraic operations of one or multiple basis random variables with specified basis probability distributions. Decompositions of frequently encountered target distributions, such as Gaussian, Cauchy, exponential, Gamma, Beta, etc., into a set of basis probability distributions can be precomputed and compactly stored in a look-up table that is accessible to a control unit of the HW-RNG or can be performed online by the control unit if the decomposition of the target distributions or changes thereto are not available in precomputed form, by executing a known approximation and/or decomposition algorithm. Similarly, the probability distribution obtained from transformation of random variables can equally be expressed as compositions of basis probability distributions. Next, the control unit compares the basis probability distributions involved in the representation of the target distribution or changes to the target distribution, i.e. the participating basis probability distributions of the set of basis probability distributions available for target distribution approximation, to the primitive probability distributions available in the sample generation stage. The control unit attempts to match each participating basis probability distribution to one of the programmed primitive probability distributions of the sample generation stage, using direct correspondence or indirect correspondence. The former does not require any arithmetic transformation of the underlying random variable, whereas the latter involves the application of an elementary arithmetic operation (addition, subtraction, multiplication, division, exponentiation, logarithm or combinations thereof) to the random variable whose primitive probability distribution has been matched by indirect correspondence. A common arithmetic operation to be applied is the scale operation, the shift operation or the shift-and-scale operation. If one or more of the participating basis probability distributions cannot be matched with any of the programmed primitive probability distributions, then the control unit of the HW-RNG in accordance with embodiments of the invention instructs the programming unit of the sample generation stage, or one of the free programming units if there are several such units provided in the sample generation stage, to reprogram as many sets of p-bit devices of the sample generation stage as there are unmatched participating basis probability distributions. The sets of p-bit devices undergoing reprogramming are programmed according to one of the participating basis probability distributions, which means that the primitive probability distributions associated with the reprogrammed p-bit device sets are adjusted to correspond to the relevant basis probability distribution. This is achieved by adjusting the expectation values associated with the individual p-bit devices of each set of p-bit devices undergoing reprogramming, such that the adjusted expectation values match the probability values that define/represent the relevant basis probability distribution.

In embodiments of the invention, frequent reprogramming of the p-bit sets of the sample generation stage can be avoided by a judicious initial programming choice for the sets of p-bit devices. HW-RNGs in accordance with embodiments of the invention may receive scheduling information that is indicative of future adaptations of the target distribution, following a predetermined schedule. For instance, simulated annealing applications in general make use of an annealing schedule which determines the updates to the target distribution through a temperature parameter. The scheduling information can thus be used by the control unit of the HW-RNG to instruct the programming unit(s) of the sample generation stage to perform an initial programming of the p-bit device sets that anticipates and fully covers all future participating basis probability distributions. If not all the future participating basis probability distributions can be anticipated, the control unit may still be configured to timely predict the participating basis probability distributions that need to be programmed, based on the scheduling information. The control unit thus instructs the programming unit of the sample generation stage to reprogram some of the primitive probability distributions (preferably unused ones, or the least frequently used ones) ahead of time, so that the reprogramming phase has completed when samples from the updated target distribution need to be drawn. Additionally, a sample buffer may be arranged between each sampling circuit of the sample generation stage and the selection circuitry of the sample processing stage, which enables producing primary samples from the primitive probability distributions during the reprogramming phases of the corresponding p-bit device sets. This way, reprogramming events with respect to one or more p-bit device sets of the sample generation stage does not stall the output sample generation process of the HW-RNG and guarantees a minimum throughput/generation rate of output samples. Alternatively or additionally, primitive probability distributions may be instantiated redundantly, e.g. programmed on two or more p-bit device sets in parallel, whereby reprogramming of one of these p-bit device sets does not pause the output sample generation process. The control unit of the HW-RNG may be configured to monitor or receive monitoring information pertaining to the selection frequency of primary samples seeded by each set of p-bit devices, based on which the control unit identifies infrequently used p-bit device sets. Moreover, the control unit of the HW-RNG may be configured to predict the future evolution of the target distributions and the participating basis probability distributions that need programming based on the target distribution evolution of the recent past. That is, the control unit may be configured to monitor and analyze past changes in the target distribution to speculative or predictively pre-decompose possible candidate distributions for future adaptations of the target distribution into participating basis probability distributions target distributions.

In embodiments of the invention, the arithmetic operations are performed by function logic blocks of the sample processing stage. As for the initial programming of the primitive probability distributions related to the sample generation stage, the function logic blocks may be initialized (e.g. initially configured) to perform a set of arithmetic operations, such as a collection of arithmetic operations identified via a pre-computed decomposition of the target distributions and possible evolutions thereof. For instance, a first number of the available function blocks are allocated to scaling operations, a second number of the available function blocks are allocated to shift-and-scale operations, a third number of the available function blocks are allocated to the addition of samples drawn from different primitive probability distributions, a fourth number of the available function blocks are allocated to the multiplication of samples drawn from different primitive probability distributions, and so forth, wherein the first, second, third, fourth and subsequent numbers are determined according to an initial decomposition or approximation of the target distribution by an ensemble of participating basis probability distributions. During operation of the HW-RNG, appropriate function logic blocks of the sample processing stage can be enabled to perform the arithmetic operations on a subset of the primary samples produced by the sample generation stage. The control unit of the HW-RNG is configured to supply the select signal to the selection circuitry of the sample processing stage, which determines the subset of primary samples that are input variables to the actively performing function logic blocks. The subset of primary samples is defined by the participating basis probability distributions. Moreover, the control unit selects those function logic blocks as appropriate that need to apply an arithmetic operation on the primary samples in order to obtain an output sample. The arithmetic operations for participating basis probability distributions that compose the target distribution, or an approximation thereof, are determined by the previously obtained decomposition or approximation of the target distribution. If a particular arithmetic operation is not yet realized by one of the function logic blocks of the sample processing stage, but the operation is present in the evolving target distribution, the control unit of the HW-RNG may supply reconfiguration data to an available (e.g. currently unused) function logic block to instruct the function logic block to perform the relevant, not yet realized arithmetic operation. Like the reprogramming of the sets of p-bit devices in accordance with participating basis probability distributions, not yet reflected by the current ensemble of already programmed primitive probability distributions, the control unit may anticipate or predict modified arithmetic operations to be performed by one or more of the function logic blocks, e.g. based on the scheduling information or the analysis of monitored adaptation history of the target distribution. This allows the modification of function logic blocks ahead in time, e.g. prior to the moment in time where an output sample of the updated target distribution is effectively generated. Each function logic block may comprise logic elements suitable for performing the elementary arithmetic operations, e.g. one or more adders, multipliers, or combinations thereof.

In some embodiments, adaptations of the target distribution may be treated as a correction, and basis probability distributions may be added or removed in a selective manner, by selectively forwarding or discarding primary samples from the seeding p-bit device sets, in accordance with the correction. Function logic blocks can be selectively added or removed, e.g. if the number of components of a random vector associated with the target distribution changes, and/or are selectively modified with respect to the arithmetic operation performed thereby. For a target distribution that involves only a scalar random variable, one function logic block is typically actively performing (operative). Conversely, several function logic blocks may be operative at the same time if the target distribution is multivariate and defines a random vector containing multiple random variables. Alternatively, a single function logic block or sequence of single operating function logic blocks may be used to generate the components of a multi-dimensional output sample (from a corresponding multivariate target distribution) in a sequential manner, provided that the output sample generation rate is a fraction of the operating rate of the HW-RNG, e.g. the cycle rate determined by a clock signal that synchronizes the components of the sample generation stage and the sample processing stage, and optionally of the primary sample buffer and output sample buffer respectively arranged after each stage. Here, the set of p-bit devices, the programming unit and the sampling circuit associated with each set of p-bit devices are components of the sample generation stage, and the selection circuitry and the function logic blocks are components of the sample processing stage. The components of the sample generation stage and sample processing stage may be operated in a pipelined fashion, e.g. the HW-RNG implements a pipeline/has a pipeline architecture. Hence, different components of the sample generation and processing stage may perform different phases of the output sample generation process in parallel, each phase being related to a different output sample or a different component of a vector output sample.

In embodiments of the invention, the control unit of the HW-RNG can therefore respond to evolving or adaptive target distribution without stalling the output sample generation process, by modifying the selection of or switching between different function logic blocks which embody different arithmetic operations and further by modifying the selection of primary samples that contribute to the inputs of selected, actively performing function logic blocks. Reprogramming of the sets of p-bit devices of the sample generation stage and reconfiguration of the function logic blocks of the sample processing stage are not required as long as the dynamically changing target distribution, or the substitution of a new target distribution, can be decomposed or approximated by basis probability distributions that are already represented by primitive probability distributions encoded in the statistical means of the sets of p-bit devices. Only if not all participating basis probability distributions are covered by the set of primitive probability distributions associated with the sample generation stage or not all the arithmetic operations involved in the decomposition and/or approximation of the updated target distribution are provided by the function logic blocks of the sample processing stage, does the control unit proceed with the transmission of reprogramming data and/or reconfiguration data. However, reprogramming phases of sets of p-bit devices or reconfiguration of functional logic blocks (if lasting for several cycles) can often by anticipated by scheduling information or data analysis of the preceding evolution of the target distribution, or compensated by redundant hardware (e.g. redundant set of p-bit devices and/or redundant function logic block), so that long delays and stalls can be avoided and a good throughput of output samples maintained during the whole duration of HW-RNG operation.

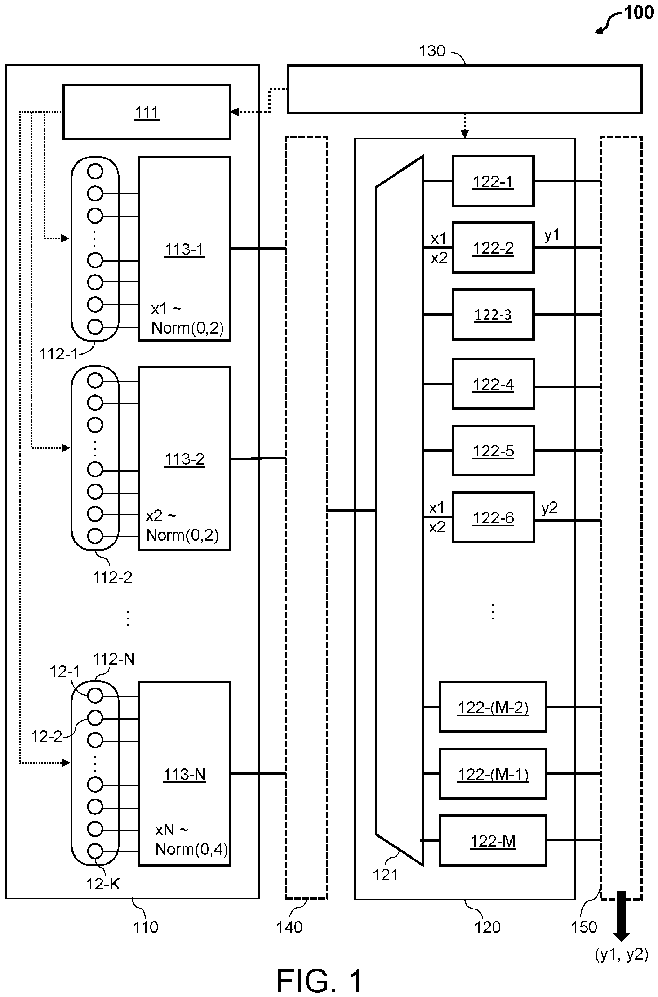

FIG. 1 is a block diagram of a hardware random number generator (HW-RNG) according to an embodiment of the invention. The HW-RNG 100 comprises a sample generation stage 110, a sample processing stage 120 and a control unit 130 in communication with the sample generation stage and the sample processing stage. A plurality of sets of programmable p-bit devices, e.g. N such p-bit device sets 112-1 through 112-N, are arranged in the sample generation stage. Each set of p-bit devices contains a plurality of parallelly working p-bit devices, e.g. K such p-bit devices 12-1 through 12-K. In embodiments of the invention, the number 'K' of p-bit devices per set of p-bit devices may be of the order of thousands of p-bit devices. Each of the p-bit device of the sampler generation stage 110 may be provided as a reconfigurable stochastic magnetic tunnel junction (MTJ) device, e.g. using the thermally activated fluctuations of the magnetic free layer of magnetic MTJ devices as described in P. Debashis, et al. "Gaussian Random Number Generator With Reconfigurable Mean and Variance Using Stochastic Magnetic Tunnel Junctions", IEEE Magnetics Letters, vol. 13, pp. 1-5, 2022. Other tunable sources of rapidly fluctuating random or pseudorandom bits may be used as the programmable targets addressed by at least one programming unit 111 of the sample generation stage 110. For instance, linear-feedback shift registers (LFSR) as pseudorandom number generators may be used as sources of random bit sequences with controllable mean value.

A plurality of sampling circuits 113-1 through 113-N, associated with the plurality of p-bit device sets 112-1 through 112-N, is arranged in the sample generation stage 110, such that each set of p-bit devices supplies random bits as inputs to a corresponding one of the sampling circuits. For instance, set 112-1 of p-bit devices is connected to sampling circuit 113-1 and supplies p-bits as inputs to the sampling circuit 113-1, set 112-2 of p-bit devices is connected to sampling circuit 113-2 and supplies p-bits as inputs to the sampling circuit 113-2, and so forth. Each p-bit device of the sets of p-bit devices is configured to generate a stream of p-bits of which individual p-bits can be retained as input bits to the connected sampling circuit. The stream of p-bits generated by each of the p-bit devices of the sampling stage has an associated probability of producing logical '1' bits, $P(1) = p$, and probability of producing logical '0' bits, $P(0) = 1-P(1) = 1-p$, which is controllable. As individual random bits are realized in an independent way by the respective p-bit devices, the probability 'p' also designates the statistical mean value (also called expectation value) for a sequence of p-bits originating from the same p-bit device. This statistical mean value with respect to each p-bit device is individually programmable. As explained before, each one of the sets of p-bit devices is programmed according to a primitive probability distribution. This means that probability values p11, p12, ..., p1K representing a first one of the primitive probability distribution, e.g. prim-pdf(1), are encoded in the adjustable means of the p-bit devices 12-1 to 12-K of the corresponding set of p-bit devices, e.g. p-bit device set 112-1, probability values p21, p22, ..., p2K representing a second one of the primitive probability distribution, e.g. prim-pdf(2), are encoded in the adjustable means of the p-bit devices 12-1 to 12-K of the corresponding other set of p-bit devices, e.g. p-bit device set 112-2, etc. In total, a set of up to N distinct or identical primitive probability distributions prim-pdf(1), prim-pdf(2), ..., prim-pdf(N) can be programmed this way.

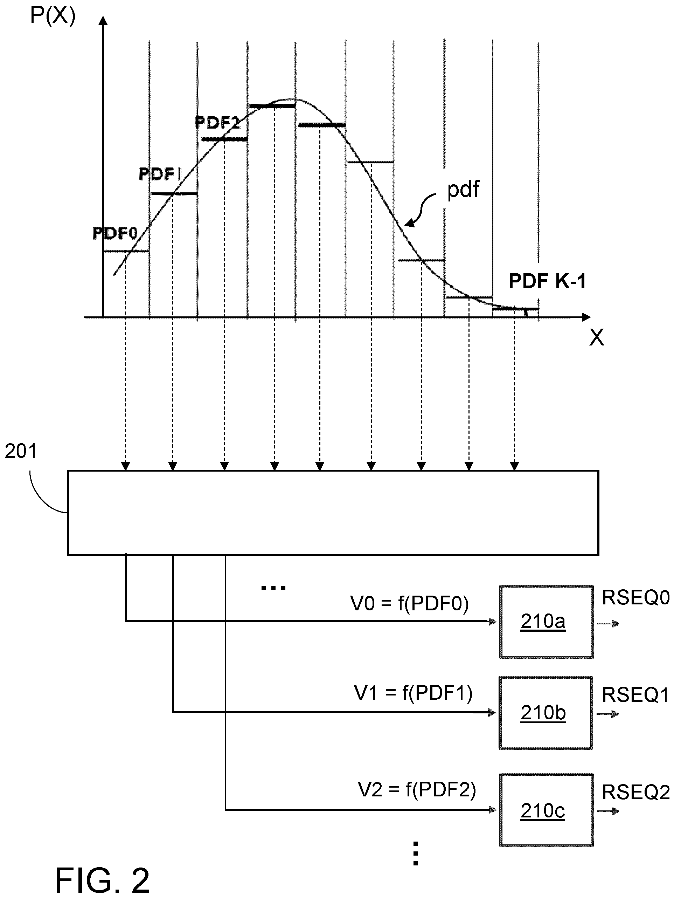

The programming unit 111 of the sample generation stage 110 is configured to set the expectation values of the distinct p-bit devices belonging to each set 112-1 to 112-N in accordance with the primitive probability distribution. In alternative embodiments, several programming units may be provided in the sample generation stage to enable parallel or time-overlapped programming of multiple sets of p-bit devices, e.g. a separate programming unit for each set of p-bit devices in the sample generation stage. An initial set of primitive probability distributions to be programmed by the programming unit 111, and all subsequent updates or replacements of the primitive probability distributions, may be supplied by the control unit 130. Programmable driving circuits for tunable p-bit arrays, which can be used as programming units in embodiments of the present invention, are described in patent application EP23216348, and more particularly the embodiments referring to FIG. 2 to FIG. 5 therein, which are hereby incorporated by reference.

The sampling circuits 113-1 through 113-N associated with the plurality of p-bit device sets 112-1 through 112-N are configured to generate a set of primary samples from the corresponding set of primitive probability distributions. Each sampling circuit receives the K independent p-bit realizations of the connected set of p-bit devices as random bit inputs and is configured to randomly select one of these random bit inputs. Since each random bit input is associated with a value of the random variable that is described by the respective primitive probability distribution, the so selected random bit determines a random draw from that primitive probability distribution, i.e. generates a primary sample from the primitive probability distribution. Each sampling circuit is configured to realize a primary sample from the corresponding primitive probability distribution with certainty during each cycle of the HW-RNG. This contrasts with rejection-acceptance based sampling devices, in which trial samples are not always accepted. As explained below, each sampling circuit may comprise a binary selection tree that receives the K independent p-bit realizations of the connected set of p-bit devices as random bit inputs to its leaf nodes and is configured to randomly select one of the candidate random bit inputs at its root node. The origin or seed of the selected random bits are tracked by the binary selection tree, thus allowing to identify the p-bit device in the connected set of p-bit devices that seeded the selected random bit and hence the observed value of the random variable from which the sampling circuit draws the primary samples. In embodiments of the invention, the sampling circuit may have a pipelined architecture in which each depth stage of the binary selection tree constitutes a separate stage of the pipeline. Hence, multiple cycles of the HW-RNG are typically necessary to obtain a primary sample from each of the sampling circuits after each new application of random bit inputs..

The primary samples produced by the sampling circuit 113-1 to113-N are forwarded to the selection circuitry 121 of the sample processing stage 120. Optionally, a sample buffer 140 configured for temporarily holding the primary samples produced by the sample generation stage 110 can be connected between the sample generation stage 110 and the sample processing stage 120. The sample buffer 140 has the additional advantage that primary samples originating from a set of p-bit devices that has been subjected to reprogramming are still available in the buffer 140 and, hence, can still contribute to the generation of output samples (e.g., processed combinations of primary samples). The selection circuitry 121 is configured to select one or multiple of the forwarded primary samples, based on a select signal from control unit 111, and forward the selected primary samples to at least one of the function logic blocks 122-1, 122-2, 122-3, 122-4, 122-5, 122-6, ..., 122-M of the sample processing stage 120. This means that the selection circuitry is adapted to perform the routing and transport of primary samples between selected sampling circuits and corresponding function logic blocks. As explained above, only the primary samples pertaining to primitive probability distributions that are participating basis probability distributions are selected by the selection circuitry 121 and constitute inputs to the corresponding function logic blocks of the sample processing stage 120. Similarly, only function logic blocks that are configured to actively perform arithmetic operations involved in the decomposition or approximation of the target distribution are operatively connected with the sampling circuits that provide the respective primary samples as inputs. The control unit 130 determines and supplies the select signal to the selection circuitry 121, and further determines and activates the required function logic blocks during output sample generation process, according to the target distribution decomposition/approximation result. In embodiments, the selection circuitry of the sample processing stage may be implemented by appropriate multiplexing or routing circuitry.

Each of the M function logic blocks 122-1 through 122-M comprises function logic elements suitable for performing elementary arithmetic operations, such as addition, subtraction, multiplication, division, exponentiation, logarithm, or compositions thereof, on groups of primary samples as input variables. Here, each group of primary samples include one or more primary samples. This means that each function logic block of the sample processing stage is adapted to receive one or more of the selected primary samples as inputs and transform combinations of the received primary samples by application of a sequence of elementary arithmetic operations including at least one arithmetic operation. In embodiments, each function logic block may comprise a combination of at least one adder and at least one multiplier. Several primary samples may be processed sequentially by the function logic blocks, e.g. added and accumulated one primary sample at the time, or may be processed in parallel, depending on the parallel processing capabilities of the hardware implementations of the function logic blocks. For example, function logic blocks of the sample processing stage may be configured to perform a scale-and-shift operation on a single primary sample input x, e.g. perform the arithmetic chain of operations $f(x) = (a*x) + b$ with scale factor a and shift constant b. As another example, function logic blocks of the sample processing stage may be configured to compute a linear combination of all N primary sample inputs x1, x2, ..., xN, such that $f(x1, x2, ..., xN) = a1*x1 + a2*x2 + ... + aN*xN$, wherein a1 through aN are weight factors. In yet another example, function logic blocks of the sample processing stage may be configured to calculate the product or ratio of two primary sample inputs x1 and x2, e.g. $f(x1, x2) = x1*x2$ or $f(x1, x2) = x1/x2$. The preceding examples are not exhaustive but were chosen to illustrate the various arithmetic operations that each function logic block can perform. If no transformation is needed, e.g. the unity operation $f(x) = x$ is applied, the function logic elements of the function logic block can be bypassed. A single function logic block may be actively performing and transform the unprocessed primary samples to obtain processed samples as output samples of a univariate target distribution, or sequentially obtain processed samples as output sample components of a multivariate target distribution, e.g., obtain y1 and then obtain y2 during the following cycle such that the tuple (y1, y2) forms a two-component output sample of a bivariate target distribution. Alternatively, multiple function logic blocks may be actively performing and transform the unprocessed primary samples to obtain processed samples as output sample components of a multivariate target distribution, e.g., obtain y1 and y2 during the same cycle of the HW-RNG such that the tuple (y1, y2) forms a two-component output sample of a bivariate target distribution. An output sample buffer 150 may be provided to temporarily hold output samples or collect components of sequentially generated vector output samples. The sample buffers 140, 150 may be beneficial for meeting timing constraints and improving the pipelined operation of the HW-RNG 100.

In the present embodiment, function logic block 122-2 has been enabled by the control unit 130 and actively transforms primary random samples x1 and x2 by calculating their ratio, i.e. $y1 = f(x1, x2) = x1/x2$. The output y1 of function logic block 122-2 corresponds to the first component of an output sample (y1, y2). Furthermore, function logic block 122-6 has been enabled by the control unit 130 and actively transforms primary random samples x1 and x2 by calculating their sum, i.e. $y2 = f(x1, x2) = x1+x2$. The output y2 of function logic block 122-6 corresponds to the second component of an output sample (y1, y2). In the present example, the target distribution is a bivariate distribution with $pdf(Y) = C(y1; 0, 1)*Norm(y2; 0, 4)$, where $C(x; x0, \gamma)$ designates a Cauchy-distributed random variable x with location parameter x0 and scale parameter $\gamma$ and $Norm(x; \mu, \sigma^2)$ designates a normally distributed (Gaussian distributed) random variable x with mean $\mu$ and variance $\sigma^2$. The exemplary decomposition of the target distribution into basis probability distributions by control unit 130, e.g. chosen as members of the Gaussian-distributed family, results in two participating basis probability distributions x1 and x2, both chosen ~Norm(0, 2). Accordingly, the primitive probability distributions associated with p-bit device sets 112-1 and 112-2 have been programmed to represent the basis probability distribution Norm(0, 2). Primary samples x1 and x2 are drawn independently by sampling circuits 113-1 and 113-2, respectively. If the bivariate target distribution Y of the present example would evolve to $pdf(Y) = C(y1; 0, 1)*Norm(y2; 0, 8)$, control unit 130 may choose primitive-pdf(xN) = Norm(xN; 0, 4) as an additional, compensative basis probability distribution, select the primary sample xN produced by sampling circuit 113-N as an additional input variable to function logic block 122-6, and reconfigure function logic block 122-6 to compute the sum $f(x1, x2, xN) = x1+x2+xN$. Alternatively, control unit 130 may instruct function logic block 122-6 to compute the linear combination $f(x1, x2) = x1/SQRT(2)+x2/SQRT(2)$ instead.

In embodiments of the invention, the control unit may monitor the efficiency with which the generated p-bits of the different sets of p-bits contribute to the generation of each output sample. If too many sets of p-bit devices are contributing to each output sample, the control unit may reallocate the p-bit generating resources more efficiently by replacing the group of primary samples that are inputs to one of the functional logic blocks with another, smaller-sized group of primary samples, by reprogramming one of the primitive probability distributions associated with the set of p-bit devices, by reconfiguring the function logic block that is generating the output sample, or combinations thereof. By way of example, a logic function block performing the sum of nine primary samples x1 to x9, each normally distributed according to Norm(0,1), to obtain output samples drawn from the univariate normal distribution Norm(0,9) requires primary sample inputs that originate from nine different sets of p-bit devices, which is a rather inefficient use of the sets of p-bit devices. The control unit may thus reduce the number of primary samples selected as inputs to this function logic block to x1, and further instruct the function logic block to compute $f(x) = x1/3$ instead. Alternatively, the control unit may instruct the programming unit of the sample generation stage to proceed with the reprogramming of one of the primitive pdf's to represent Norm(0,9) as the adapted basis probability distribution. Other possibilities exist, depending on the availability of unused sets of p-bit devices, the desired throughput, and other performance factors. For instance, the control unit may also reduce the number of primary samples selected as inputs to this function logic block to x1, x2 and x3, and further instruct the function logic block to compute $f(x) = x1/2+x2/2+x3$ instead.

The preceding choices for the target distribution and its decomposition into basis probability distributions belonging to the parametric family of Gaussian distributions are merely illustrative and non-limiting. Target distributions of arbitrary shape and dimension can be composed of or constructed from, at least approximately, one or more basis probability distributions. The basis probability distributions of which the target distribution is composed of, or which approximate the target distribution, are typically restricted to an ensemble of standard parametric families of probability distributions, e.g. including but not limited to the Binomial, Geometric, Poisson, Gaussian Normal, Exponential, Erlang, Cauchy, Lévy, Beta, Gamma, Voigt, Rayeigh and Chi-square standard families. The composition of basis probability distributions is preferably expressible through a sequence of algebraic operations with respect to their random variables. As indicated, the basis probability distributions often are in parametrized form and the control unit may fit the free parameters during decomposition/approximation of the target distribution to reduce or eliminate the residual approximation error. The free parameters may include a localization parameter, a scale parameter, and possibly others. As demonstrated above, some or all the parameters may be implemented, partially or entirely, as constants or factors that intervene in the arithmetic operations. For instance, fixing the localization parameter may correspond to the application of a shift constant by one of the function logic blocks, and fixing the scale parameter may correspond to the application of a scale factor by one of the function logic blocks. This can be beneficial for the efficient usage of the p-bit devices: p-bits realized by a p-bit device whose expectation value is extremely low, e.g. due to a large shift (decentered) primitive probability distribution programmed according to a participating probability distribution and/or due to sharply localized peaks in the primitive probability distribution as a result of exaggerated scaling, can be avoided if the shift operation and appropriate scaling is deferred to the function logic blocks rather than encoding them directly in the programmed primitive probability distributions. This may also lead to primary samples with reduced discretization error (e.g. better resolutions of features of the primitive probability distributions, improved precision of the primary samples). Decompositions of the evolving target distribution may be precomputed and the relevant information (e.g. configuration data regarding the number and kind of basis probability distributions, types of arithmetic operations to be performed on the corresponding random variables/primary samples) stored in a look-up table from which the configuration data for the function logic block and the select signal generation by the control unit can be readily retrieved without further decomposition workloads. However, it is possible to launch a small program kernel for execution on the control unit, or an auxiliary processing unit, which performs the decomposition/approximation of the target distribution dynamically to determine the composition of basis probability distributions used to represent the target distributions and derive therefrom the necessary configuration data.

FIG. 2 illustrates the programming of a primitive probability distribution through adjustment of the expectation values of the corresponding set of p-bit devices. P-bits generated according to the probability values of the primitive probability distribution are random bit inputs to the hardware sampling circuits of the sample generation stage. In embodiments of the invention, the primitive probability distribution from which the primary samples are drawn may be an arbitrary pmf or pdf, and typically corresponds to a basis probability distribution participating in the decomposition or approximation of the target distribution or expected to participate in the decomposition or approximation of the future changes to the target distribution. Regarding the primitive probability distributions, the term "arbitrary" usually means "arbitrary shape", since the primitive probability distributions are in general univariate distributions. A smooth probability density function 'pfd' is shown in FIG. 2, whose outcomes are continuously distributed along the horizontal axis and for which the respective probability of occurrence is reported as function value on the vertical axis. The smooth probability density function is approximated by a discrete random variable 'X' that takes K different values (outcomes) along the horizontal axis. A probability mass function, P(X), is associated with the discrete random variable X and assigns a probability value to each one of the K different values of X. The discretization of the smooth probability density function 'pdf' may include the step of integrating the probability density over the respective discretization intervals/bins along the horizontal axis and assign to each bin the corresponding result of this integration, i.e., assign to each outcome x of X a probability P(x) such that P(x) equals the integral value of the continuous function 'pdf(x)' when calculated over the discretization interval l[x] that contains 'x'. In the figure, these probabilities P(x) are indicated as short straight-line segments and are labelled PDF0, PDF1, ..., PDF K-1. In embodiments of the invention, the K different outcomes of the discrete random variable X may be designated by the midpoints of the respective discretization intervals or simply labelled by an index as a reference to the respective discretization interval/bin. The most practical but non-limiting choice of index labelling of the bins is to refer to them by their order of appearance along the horizontal axis, e.g. as x being an element of the finite set {bin(0), bin(1), ..., bin(K-1)} or as x being an element of the index set i = {0, 1, ..., K-1}, where the index 'i' designates the corresponding bin: i->bin(i). The elements of the index set may be represented as binary numbers and/or the index set may be recentered about its mean, e.g., i_cen = {-K/2, ...,- 1, 1, ..., K/2} if K is pair, or else i_cen = {-(K-1)/2, ...,- 1, 0, 1, ..., (K-1)/2}. Programming unit 201 is operatively connectible to a set of programmable p-bit devices 210a, 210b, 210c, and so forth. The programming unit 201 is configured to accept a set of probability values (e.g., PDF0, PDF1, ..., PDF K-1) related to the primitive probability distribution to be encoded/programmed as inputs and generate a corresponding set of programming signals (e.g., V0 = f(PDF0), V1 = f(PDF1), V2 = f(PDF2), etc.) for setting the statistical mean values of the respective p-bit devices 210a, 210b, 210c, etc. The programming signals may be control signals that are applied - sequentially or in parallel - to auxiliary driver circuits for the different p-bit devices, or the programming signals may be directly applied as control/driver signals to the different p-bit devices. The programming unit may invoke or perform a p-bit hardware dependent transformation 'f' that maps the probability values to appropriate programming signals, e.g. by accessing a calibrated look-up table. When programming of the set of p-bit devices is completed successfully, the random bit sequences or p-bit streams produced at the outputs of the p-bit devices 210a, 210b, 210c, etc. all follow a Bernoulli distribution, the expected value of which coincides with one of the probability values representative of the primitive probability distribution. In other words, there is a unique association between each of the discretization intervals/bins, bin(0), bin(1), etc., and one of the random sequences, RSEQ0, RSEQ1, etc., such that the probability of observing the bin is equal to - up to a quantization error - the expected value of the corresponding random sequence. That is, there is an association bin(i) -> RSEQi, i = 0, 1, ..., K-1, such that $P(x = bin(i)) = E[RSEQi]$, where $E[*]$ designates the mean/expected value operator. It also follows that observations of each probabilistic bit sequence, RESQ1, RSEQ2, etc., e.g. as sampled at a given time, are instances of independent Bernoulli trials, which reflect the chances of or rejecting or accepting a sample 'u' from a uniform random variable, U[i], with respect to the corresponding bin, bin(i), depending on whether the sample 'u' is exceeding the probability value for that bin or not. Indeed, the probability of acceptance is $Prob(u \leq PDFi) = PDFi/max(PDF) \propto PDFi$ for the i-th bin.

In embodiments of the invention, the primitive probability distribution is preferably scaled, rather than being area normalized, such that its mode 'pmax' (i.e. the maximum probability value) equals one, e.g. setting pmax = 1. In that sense, the set of p-bit devices 210a, 210b, 210c, etc. emulates a vast parallelization of independent trials, distributed over the whole range of outcomes of the underlying random variable. Each of the hardware sampling circuits of the sample generation stage then provides an efficient means of selecting one successive trial out of the vast number of independent trials. This ensures that, apart from a predetermined delay, a primary sample of the primitive probability distribution is obtained at each cycle of the HW-RNG.

Sampling circuits suitable for use in the sample generation stage of the HW-RNG in accordance with embodiments of the invention are described in detail in patent application EP23216705, especially in the embodiments referring to FIG.2 to FIG. 6 therein, which are hereby incorporated by reference.

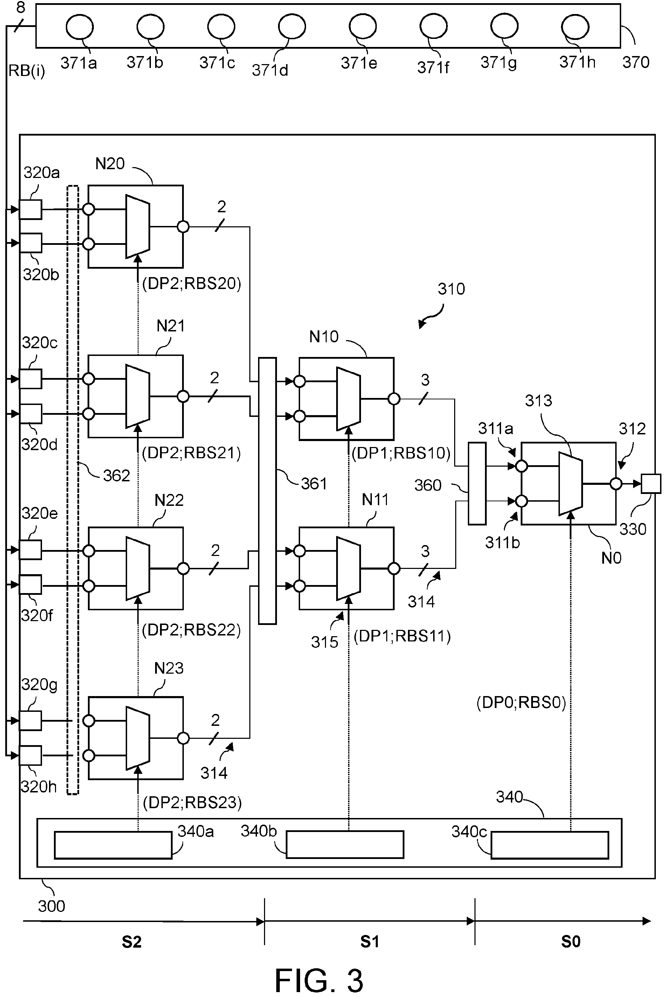

FIG. 3 is a block diagram of an exemplary sampling circuit 300 that can be used in the sample generation stage of HW-RNGs in accordance with embodiments of the invention. The sampling circuit 300 comprises input terminals 320a-h, an output terminal 330, a detection logic circuit 340, and a binary selection tree structure 310 interposed between the input terminals 320a-h and the output terminal 330. The binary selection tree structure 310 comprises a plurality of (tree) nodes which are arranged at different depth levels of the selection tree 310. Each tree node has a pair of input terminals 311a-b, an output terminal 312 and a selector circuit 313 connected between the input terminals and the output terminal. Each tree node further includes a control terminal 315 for receiving select signals (DP; RBS) that control the operation of the selector circuit 313. Among the nodes of the selection tree, the root node is the only node that has no parent node, whereas leaf nodes are tree nodes that have no child nodes. The root node acts as an output node of the binary selection tree and the leaf nodes act as input nodes. The depth level to which a node of the selection tree belongs is also referred to depth stage and is determined by the number of edges that connect the node to the root node of the selection tree. The root node N0 therefore has a depth d = 0 and belongs to the depth stage S0, the internal nodes N10 and N11 each have a depth d = 1 and belong to the depth stage S1, and the leaf nodes N20, N21, N22 and N23 each have a depth d = 2 and belong to the depth stage S2. In the binary selection tree structure 310, each child node is connected to its parent node by an edge connection 314. More precisely, the output terminal 322 of each child node is connected to the respective input terminal 321a or 321b of the parent node, depending on the position of the child node relative to the parent node. Here, the first child node of the parent node is defined to have a position or address '0' and the second child node is defined to have a position or address '1'. A single position index bit is thus sufficient to indicate the child node's position relative to the parent node and also identify the child node for a given parent node. Ancestor nodes of a particular tree node refer to nodes of smaller depths that can be reached from the tree node via more than just a single edge. Child nodes and parent nodes therefore belong to subsequent depth stages of the selection tree. Although the binary selection tree structure of the present embodiment has exactly eight leaf nodes, other embodiments may have a different or much larger number of leaf nodes, e.g. more than one hundred, e.g. more than one thousand leaf nodes. The number of leaf nodes in a perfect binary selection tree structure is always a power of two.

During the operation of the sampling circuit 300, child nodes dispatch output signals to their parent nodes, which may be relayed by synchronized or clocked hardware registers 360, 361 between the different depth stages of the binary selection tree structure. The relayed output signals constitute the input signals of the parent nodes of the subsequent depth stage. Leaf nodes receive pairs of random bits from the connected set of p-bit devices, e.g. p-bit array 370, as input signals. The relayed output signals with respect to each depth stage of the binary selection tree structure comprises an output bit as a first signal component and an indexing bit sequence as a second signal component. The output bit represents one of the random input bits RB(i) that has been repeatedly selected/accepted in all the preceding depth stages, whereas the indexing bit sequence is a record of the relative positions of the child nodes of all the preceding depth stages through which the repeatedly selected/accepted random input bits RB(i) has passed so far. The indexing bit sequence is thus extended by one position indexing bit (e.g. address bit of the selected child node) at every depth stage of the binary selection tree but reduces to a single position indexing bit for the depth stage containing the leaf nodes. Hence, a bit-width of the relayed output signals and the related edge connections between subsequent depth stages increases by one bit at every depth stage of the binary selection tree. For a perfect binary selection tree of height 'h', in which there are 2"h leaf nodes, 2^(h+1)-1 tree nodes in total and h+1 depth stages, the bit-widths 'BW' of the relayed output signals and the transmission wires of the related edge connections are BW = 2, 3, ..., 2+h for depth stages S = h, h-1, ..., 0 respectively. In some embodiments, only the final indexing bit sequence is provided at the output terminal 312 of the root node, because the output bit always being equal to a logical '1' state does not constitute useful information. In such embodiments, the bit-widths of the output signal and the related output wire of the root node of depth stage S = 0 = S0 is BW = 2+h-1 instead of BW = 2+h.

A clock signal for clocked hardware registers may be generated by a global timing control unit of the sampling circuit, which ensures that each depth stage has finished calculating the output signals and is ready to receive new input signals (e.g. preventing depth stages from stalling). Synchronization between the different depth stages may also be achieved by hardware registers that comprise suitable data status signaling logic between the subsequent depth stages, e.g. data available and data received signals. This has the advantage that the different depth stages of the binary selection tree structure can be operated as stages of a multi-stage processing pipeline. This increases the sampling circuit throughput and avoids long settling delays or race conditions that may occur in a purely combinatorial selection tree circuit. Random input bits RB(i) are optionally also buffered by a hardware register 362 at the input terminals 320a-h of the sampling circuit 300, prior to applying them pairwise to the input terminals pairs 311a-b of the different leaf nodes. This may compensate for possible differences in the signal delays of the random bit sequences RB(i), thereby ensuring that a complete input bit pair is available for each leaf node before processing by the selector circuit 313 begins. In this case, the input terminals 320a-h of the sampling circuit 300 are coupled through the hardware register 362 to the input terminals pairs 311a-b of the different leaf nodes. In the absence of the hardware register 362, the input terminals 320a-h of the sampling circuit 300 are directly coupled to or identical with the input terminals pairs 311a-b of the different leaf nodes. In alternative embodiments of the sampling circuit, output signals from child nodes may be temporarily retained in a buffer element or flip-flop that is coupled to the child node output terminal, or are placed onto a buffered delay line.

The sampling circuit 300 further comprises a detection logic circuit 340, which may be assembled from a set of independent detection unit 340a-c, wherein each depth stage S2-S0 of the binary selection tree structure 310 is associated with one of the detection units 340a-c. The detection logic circuit 340 is coupled to the input terminals of all tree nodes belonging to the same depth stage of the binary selection tree and configured to detect a tie situation among the input bit pairs that are applied the input terminals of the tree nodes belonging to the same depth stage. A tie condition or tie situation with respect to a depth stage of the binary selection tree structure is defined as the existence of at least one input bit pair among the input bit pairs applied the input terminals of the tree nodes belonging to that depth stage, of which the bit values both represent a logical '1' state ('TRUE' state). In other words, there is a tie condition for depth stage 'm' if at least one of the input bit pairs $(RB_{m,2j} ; RB_{m,2j+1})$ for nodes j = 0, ..., m-1 of depth stage 'm' is equal to (1; 1). For instance, detection unit 340a is coupled to the input terminals of all leaf nodes of depth stage S2 of the binary selection tree 310 to detect a tie condition among the input bit pairs that are applied to the leaf nodes of depth stage S2, detection unit 340b is coupled to the input terminals of all internal nodes of depth stage S1 of the binary selection tree 310 to detect a tie condition among the input bit pairs that are applied to the internal nodes of depth stage S1, and detection unit 340c is coupled to the input terminals of the root node of depth stage S0 of the binary selection tree 310 to detect a tie condition among the input bit pair that is applied to the root nodes of depth stage S0.

For each tree node, the selector circuit 313 is configured to determine which one of the two input signals is accepted, based on the select signal present at the control terminal 315, identifies the child node of which the input signal is accepted, propagate the first signal component received from the identified child node from the corresponding input terminal to the output terminal of the node, propagate the second signal component received from the identified child node from the corresponding input terminal to the output terminal, and supply the position index bit for the identified child node at the output terminal. For leaf nodes only, the input terminal of the sampling circuit that is connected to the input terminal of the leaf node plays the role of a child node and is considered to be equal to a child node for the purpose of calculating the outcomes of the selector circuit. The propagated first signal component at the output terminal of the node constitutes the first signal component of the output signal of the node. In some embodiments of the sampling circuit, the selector circuit is configured to construct an extended indexing bit sequence by inserting the position index bit for the identified child node as the most significant bit (MSB) into the indexing bit sequence being the second signal component received from the identified child node. In other embodiments of the sampling circuit, an index register is associated with each tree node and coupled to the output terminal of the node, and the index register is configured to receive the propagated second signal component and the supplied position index bit for the identified child node from the output terminal of the node and construct the extended indexing bit sequence by inserting the received position index bit as the most significant bit (MSB) into the indexing bit sequence being the propagated and received second signal component. The index register may be part of the hardware register arranged between subsequent depth stages of the binary selection tree structure. For all practical purposes of the invention, the extended indexing bit sequence is considered to be the definite second signal component of the output signal of the tree node.

In embodiments of the sampling circuit 300, the selector circuit 313 may be a combinatorial circuit. As explained further below, the selector circuit may determine which one of the two input signals is accepted, based on the following selection rules/input scenarios:

$$IND = DP*RBS + INP1*NOT(DP),$$

and

$$OUT = INP0*(NOT(DP) + DP*NOT(RBS)) + INP1*(NOT(DP) + DP*RBS),$$

wherein the indicator bit 'DP' of the first select signal designates the existence or absence of a tie condition for the depth stage that contains the selector circuit, the auxiliary random bit of the second select signal is designated as 'RBS', the position index bit supplied at the output terminal of the tree node containing the selector circuit is designated as 'IND', and the pair of input bits are designated as 'INP0' and 'INP1', wherein 'INP0' stems from the child node at relative positions '0' and 'INP1' stems from the child node with relative position '1'. Here, child node has to be replaced by input terminal of the sampling circuit for leaf nodes. Moreover, a signal mean value <RBS> of a sequence of random bits RBS is <RBSW> = 0.5, and "+" and "*" designate the bitwise OR and the bitwise AND operation, respectively.

In embodiments of the sampling circuit, each tree node may receive a pair of input signals and supply an output signal. For non-leaf nodes, each input signal comprises a signal bit - also referred to as sampled random bit or Bernoulli trial outcome bit - as a first signal component and an indexing bit sequence as a second signal component. For the leaf nodes, the indexing bit sequence is an empty sequence. The selector circuit of each tree node is configured to accept one of two input signals as part of the node output signal, and reject the other one of the two input signals, wherein the decision to accept or reject an input signal of the pair of input signals depends on the select signals present at the control terminal of the selector circuit. The accepted input signal progresses to the output terminal of the tree node. Hence, the output signal of tree nodes also comprises a signal bit as first signal component and an indexing bit sequence as second signal component. The selector circuit is further configured to determine the position index bit that identifies the input terminal of the tree node, and for non-leaf nodes also the connected child node, where the accepted input signal is currently applied. The selector circuit is further configured to send the determined position index bit as part of the output signal to the output terminal of the tree node, where the position index bit is concatenated with the second signal component of the accepted input signal to obtain an updated second signal component of the output signal. The output signal of a leaf node therefore has a second signal component that contains a single position index bit and is not empty. Moreover, the updating of the second signal component results in an extended indexing bit sequence the bit-width of which increases with every depth stage of the binary selection tree.

In embodiments of the sampling circuit, the selector circuit of each tree node may be configured to randomly decide the input signal that is to be accepted if the detection logic circuit detects a tie for the depth stage to which the tree node belongs. A tie condition is indicated by a first one of at least two select signals for the selector circuit (e.g. 'DP' hereinabove), whereas a second one of the at least two select signals for the selector circuit (e.g. 'RBS' hereinabove) provides an auxiliary random bit that forms the basis for the random decision as to which input signal is accepted. In the absence of a tie condition, the selector circuit of each tree node may be further be configured to accept the input signal of which the signal bit (i.e. first signal component) represents a logical '1' state, or else accept one of the two input signals by default (e.g. either always first input signal or always second input signal) if the signal bits of both input signals represent logical '0' states. Th latter case corresponds to a don't care situation, because signals transmitted over edge connections between tree nodes that contain zero-value signal bits are ultimately rejected by tree nodes of subsequent depth stages of the binary selection tree.

Individual probabilistic bits RB(i) may be fired on command or sampled at regular time intervals, e.g. at each clock cycle of the sampling circuit 300, and are delivered to the respective input terminals 320a-h of the sampling circuit. For instance, the first random bit RB(0) is applied to the first input terminal 320a, the second random bit RB(1) is applied to the second input terminal 320b, and so forth. In consequence, there is a one-to-one relationship between random bit sequences RB(i) and input terminals 320a-h of the sampling circuit, and also between probabilistic bit generators 371a-h and input terminals 320a-h of the sampling circuit. This one-to-one relationship extends to the input terminals of the leaf nodes, which are connected one by one to the respective input terminals of the sampling circuit. Furthermore, the random input bits are applied pairwise to the input terminals 311a, 311b of the different leaf nodes. For instance, random input bits RB(0) and RB(1) are arranged into a first input bit pair that is applied to the respective input terminals of the first leaf node N20, random input bits RB(2) and RB(3) are arranged into a second input bit pair that is applied to the respective input terminals of the second leaf node N21, and so forth.

In embodiments of the invention, the hardware sampling circuit is compatible with a programmable set of p-bit devices, e.g. an array of programmable probabilistic bit generators or programmable/reconfigurable pseudorandom number generators such as LFSBs. Combined with a set of p-bit devices, the sampling circuit allows efficient generation of random numbers from arbitrary primitive probability distributions. In some embodiments of the invention, the programmable set of p-bit devices, e.g. p-bit array 370, may comprise an additional set of programmable probabilistic bit generators that are responsible for the generation of the auxiliary random bit signals RBS(i) as the second one of the at least two select signals for the selector circuits. Much like the probabilistic bits RB(i), the auxiliary random bit signals RBS(i) may be fired on command or sampled at regular time intervals, e.g. at each clock cycle of HW-RNG. The probabilistic bits, RB(i), and the auxiliary random bit signals, RBS(i), may be generated at the same moments in time. Alternatively, other sources for random or pseudorandom number generation, different from the p-bit array 370, may be used to obtain a set independent auxiliary random bit signals RBS(i).

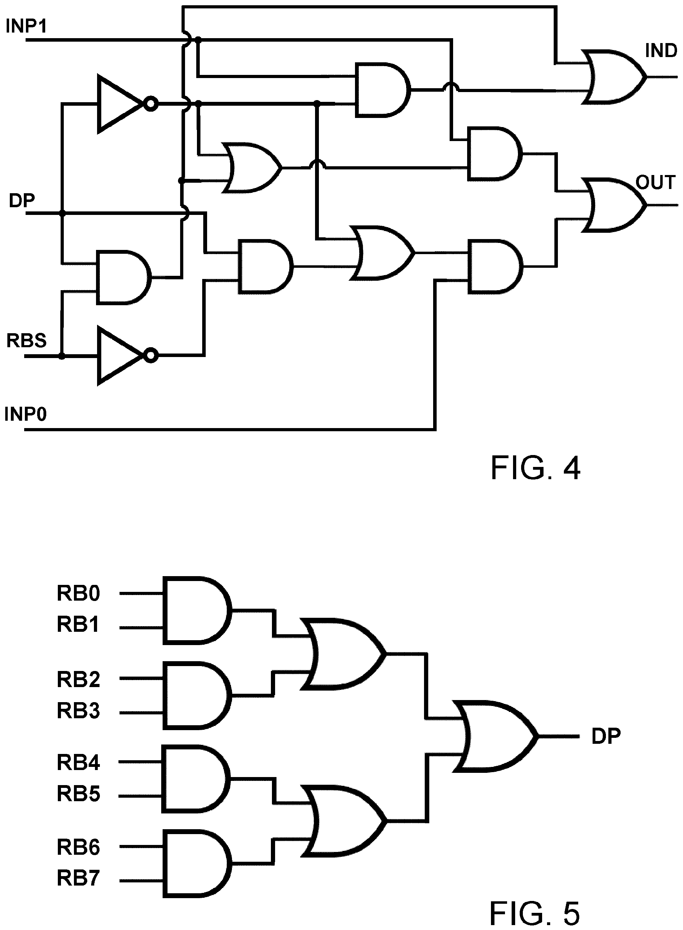

FIG. 4 shows the circuit diagram of an exemplary selector circuit that can be used in sampling circuits of HW-RNGs in accordance with embodiments of the invention. As mentioned previously, each node of the binary selection tree structure may comprise a selector circuit, which is configured to select one of the two input bits INP0, INP1 for admission to the selector circuit output (e.g., allowed to propagate to the output 'OUT'), based on the two select signals 'DP' and 'RBS'. The select signals 'DP' and 'RBS' determine the bit-operations that are performed on the input bits INP0, INP1, to single out one of the two input bits. Likewise, the selector circuit is configured to output the position index bit 'IND' with respect to the selected input bit, e.g. position index bit '0' if the first input but INP0 is admitted to the selector circuit output 'OUT' and position index bit '1' if the second input bit INP1 progresses to the selector circuit output 'OUT'. The position index bit 'IND' supplied by the selector circuit is thereafter inserted into the selected bit indexing sequence from the previous depth stage, e.g. inserted as the most significant bit (MSB), and passed on to the next depth stage. However, the position index insertion may be carried out by a dedicated index register of the tree node or an index register that is part of the hardware registers between the subsequent depth stages of the binary selection tree, rather than by the selector circuit of the tree node. The first select signal 'DP' indicates the presence or absence of a tie condition in the depth stage where the selector circuit is located, while the second select signal 'RBS' designates an auxiliary random bit of a random bit sequence with mean value <RBS> = 0.5, i.e., RBS takes the values '0' and '1' with equal probability. The second select signal 'RBS' is only required if the first select signal 'DP' is 'TRUE/1' and may be ignored/disabled otherwise. As can be inferred from the circuit diagram of FIG. 3, the value of the output bit at the selector circuit output 'OUT' is governed by the following general expression:

$$OUT = INP0*(NOT(DP) + DP*NOT(RBS)) + INP1*(NOT(DP) + DP*RBS),$$

wherein "+" and "*" designate the bitwise OR and the bitwise AND operation, respectively. It is easily verified that in the event of a detected tie condition (i.e., DP = 1), the previous expression simplifies to: OUT = INP0*NOT(RBS) + INP1*RBS. Depending on the precise value of the auxiliary random bit 'RBS', the value of the output bit is either equal to INP0 or INP1. Therefore, in situations in which a tie has been detected for the depth stage in which the selector circuit is located, each input bit of the input bit pair INP0, INP1 has a 50% chance of progressing to the selector circuit output. Furthermore, the value of the position index bit 'IND' at the selector circuit output is governed by the following general expression:

$$IND = DP*RBS + INP1*NOT(DP).$$

This expression is simplified to IND = RBS in the case of a detected tie condition, confirming that the precise value auxiliary random bit 'RBS' not only randomly selects one of the input bits but also indicates the relative position (address) of the selected input bit as seen by the selector circuit. Indeed, selecting between two successful Bernoulli trials with respect to two different discretization bins should not be biased towards one of the bins but happen with equal probability.

On the other hand, the absence of a tie (i.e. DP = 0) leads to the following simplified expressions for the output Bi and the position index bit:

$$OUT = INP0 + INP1 \text{ and } IND = INP1.$$

This means that the value of the output bit is determined by the bitwise OR operation on the two input bits, whereas the position index bit is given by the value of the second input bit INP 1. This covers the following three cases: (i) INP0 = 1, INP1 = 0, IND = 0, (ii) INP0 = 0, INP1 = 1, IND = 1, (iii) INP0 = INP1 = 0, IND = 0. Indeed, a successful Bernoulli trial with respect to one of the bins equates to an input bit that is one that should prevail over an unsuccessful Bernoulli trial with respect to another bin. If both Bernoulli trials are unsuccessful, it does not matter which one is selected, because it will be ultimately discarded in one of the subsequent stages of the binary selection tree. One may then decide to select the first input bit INP0 by default, by ensuring that IND = 0 in case (iii). Of course, one may also do the opposite by default, i.e. setting IND = NOT(INP0) such IND = 1 always holds by default in case (iii). It is noted that the case of INP0 = INP1 = 1 is not included here, as this corresponds to a tie situation.

The detection logic circuit for detecting ties among a plurality of input bit pairs may comprise a separate detection unit at each depth stage of the binary selection tree structure. The separate detection units associated with the different depth stages are preferably operating in parallel, whereby a processing latency related to each depth stage can be kept small. Alternatively, a single detection logic circuit is provided for the entire binary selection tree structure, e.g. is shared by all depth stages. In such embodiments, the single detection logic circuit is configured to detect ties among the plurality of input bit pairs of each depth stage of the binary selection tree structure in a sequential manner. In yet other embodiments of the invention, the detection logic circuit for detecting ties among a plurality of input bit pairs comprises separate detection units, but several depth stages of the binary selection tree structure share the same detection unit.

The separate detection units of the detection logic circuit may be implemented in various ways. FIG. 5 is a circuit diagram of an exemplary detection unit related to a level-three depth stage of the binary selection tree structure. A level-three depth stage comprises four internal tree nodes and receives eight random bits RB0-RB7 as inputs, wherein the random input bits are supplied pairwise to the corresponding tree node, e.g. a first pair is formed by input bits RB0 and RB1 with respect to the first node of the third depth stage, a second pair is formed by input bits RB2 and RB3 with respect to the second node of the third depth stage, and so forth. The input bits of each pair are fed into a logical AND gate to detect whether the two bits of the pair both have a '1' logical state. The outputs from the AND gates are then subjected to a cascade of logical OR gates, which form a multi-input OR gate. The resulting output 'DP' from the multi-input OR gate is 'TRUE' if any of the four input bit pairs represents a tie condition, i.e. the two bits of the pair both have a '1' logical state. Otherwise, the resulting output 'DP' from the multi-input OR gate is 'FALSE', indicating that no tie condition has been detected at this depth stage.

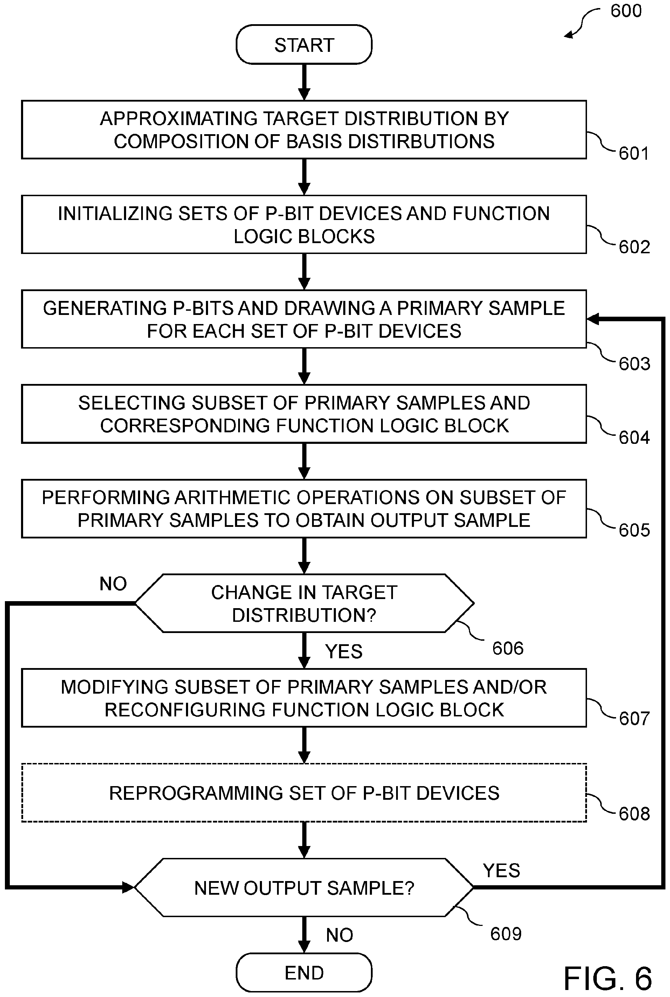

FIG. 6 illustrates the steps of a random number generation method 600 using the HW-RNG according to embodiments of the previous aspect. In the first step 601 of method 600 a user-defined or otherwise determined target distribution is approximated by a composition of basis probability distributions that are chosen from a specified ensemble of trial basis probability distributions. That is, the target distribution is decomposed into a set of basis probability distributions, or the target distribution is exactly or approximatively reconstructed by combining basis probability distributions (e.g. through composition operations that typically involve convolutions or integrals). The decomposition or reconstruction of the target distribution can be performed iteratively: starting from one basis probability distribution, more basis probability distributions are added successively to reduce or eliminate an approximation error. Composition of basis probability distributions are preferably restricted to those compositions that can be equivalently expressed by a corresponding sequence of algebraic operations acting on the related random variables. The resulting set of basis probability distributions, also referred to as the participating basis probability distributions (i.e. participating in the decomposition/approximation), are usually univariate distributions of a standard parametric family of probability distributions. The control unit or another processing unit of the HW-RNG may perform the decomposition/approximation of the original target distribution in terms of basis probability distributions. Alternatively, the decomposition/approximation of the original target distribution in terms of basis probability distributions can be precomputed and the results communicated to the control unit of the HW-RNG. The set of participating basis probability distributions and related algebraic operations of the associated random variables, e.g. the composition/decomposition information, can be precomputed even for future evolution of the target distribution insofar as this evolution is known or can be predicted, e.g. known through scheduling information accessible to the control unit of the HW-RNG. The (de)composition information can be stored in a memory device of the HW-RNG, e.g. a look-up table of the HW-RNG included in or readable by the control unit.

In the following step 602, the sets of p-bit devices of the sample generation stage are programmed according to the (de)composition information. The control unit generates the required programming data and supplies it to the programming unit. The programming unit generates the programming signals necessary for adjusting the expectation values of the p-bit devices of the sets of p-bit devices that require initial programming. As a result, the programmed sets of p-bit devices encode primitive probability distributions that are representative of the set of participating basis probability distributions, e.g. up to a scaling or shift factor and possibly subjected to discretization errors due to the finite precision with which the p-bit devices can be programmed. Moreover, at least one function logic block of the sample processing stage, e.g. all the function logic blocks, are configured according to the (de)composition information in step 602. The control unit may be configured to map the algebraic operations onto a sequence of arithmetic operations (e.g. addition, subtraction, multiplication, division, exponentiation, logarithm) to be performed by the at least one function logic block, wherein the sequence of arithmetic operations includes at least one such arithmetic operation. The control unit may generate the necessary configuration data and supply it to the function logic blocks.

The output sample generation process then starts with the generation of p-bits by the sets of p-bit devices in step 603. Each p-bit device may deliver a p-bit per clock cycle of the HW-RNG. The p-bits associated with each set of p-bit devices are supplied to the corresponding sampling circuit of the sample generation stage to produce a primary sample with respect to each set of p-bit devices in step 603. As explained before, the sampling circuit randomly chooses one p-bit among the set of input p-bits. The chosen p-bit corresponds to the primary sample and is drawn from the primitive probability distribution according to which the associated set of p-bit devices has been programmed. The sampling circuits of the sample generation stage may produce respective primary samples during each clock cycle of the HW-RNG, but typically have an associated latency between the moment in time of receiving a set of input p-bits and the moment in time of delivering the primary sample.

At least one subset of primary samples, e.g. comprising at least one primary sample, and a corresponding at least one function logic block are selected in step 604, and each of the selected subsets of primary samples is transmitted to the correspondingly selected function logic block. Each function logic block accepts the received subset of primary samples as inputs. The control unit determines the subset of primary samples and corresponding function logic block based on the previously obtained (de)composition information, generates the necessary select signals and applies them to the selection circuitry of the sample processing stage. In the case of multivariate target distributions, several different subsets of primary samples and correspondingly many function logic blocks may be determined by the control unit. However, the relationship between the number of subsets of primary samples and the number of selected function logic blocks is not always one-to-one, because a single subset of primary samples may serve as input to more than one function logic block, provided they operate on the same set of random variables.

The function logic blocks to which arithmetic operations have been assigned according to the (de)composition information carry out the sequence of arithmetic operations in step 605, using the supplied subset of primary samples as inputs. This transforms each subset of unprocessed primary samples into a processed output sample. An output sample may be drawn from the target distribution in step 605 during each clock cycle of the HW-RNG. Typically, the function logic blocks have an associated latency between the moment in time of receiving a subset of input primary samples and the moment in time of delivering the output sample.

Next, the control unit verifies in step 606 whether a change in the target distribution has occurred. Such a change may result from scheduling information that dictates the timing of adaptations to the target distribution or may be communicated to the control unit. If no change occurred, the control unit jumps directly to step 609. Otherwise, the target distribution has evolved, and the (de)composition information needs to be recomputed or updated. This means that the control unit may retrieve the updated (de)composition information from the memory device, if this information is available, or otherwise proceeds with a new decomposition/approximation/reconstruction process with respect to the evolved target distributions. The control unit may also determine a correction to the current (de)composition information in some cases, e.g. if the change is progressive rather than abrupt.

As a result, at least one selected subset of primary samples and the correspondingly selected at least one function block may be modified in step 607. That is, primary samples in each subset of primary samples may be replaced by other primary samples, not yet contained in the subset, more primary samples are included in the respective subsets, or primary samples are removed from the respective subsets. Each of the subsets of primary samples may be routed to a different function logic block and/or selected function logic blocks may be reconfigured to perform a different sequence of arithmetic operations or use a different number of inputs. All these modifications are performed by the control unit. Moreover, the control unit may monitor and optimize the efficient usage of sets of p-bit devices and function logic blocks and may reallocate resources if advantageous. The modifications of step 607 compensate for the change in the target distribution, i.e. the HW-RNG is reconfigured to adapt to the new target distribution.

Optionally, one or more of the sets of p-bit devices in the sample generation stage may be reprogrammed during step 608 such that the associated primitive probability distributions represent updated basis probability distributions. This can be beneficial when an alternative set of participating basis probability distributions has been identified, which comprises less participating basis probability distributions, thus allowing to free p-bit resources, or comprises more accurate participating basis probability distributions, thus allowing sampling with improved precision. During reprogramming phases of the sets of p-bit devices, primary samples may still be consumed from optional sample buffers of the HW-RNG.

In step 609, the control unit verifies whether another output sample needs to be generated. If not, the output sample generation stops. Otherwise, the output sample generation process continues at step 603.

Embodiments of the invention can be used in various applications that involve sampling form random variables, e.g. probabilistic computing applications such as Bayesian Neural Networks and annealers.

An exemplary use of HW-RNGs and related methods is the generation of random numbers from probability distributions that are common to annealers, such as Exponential, Boltzmann, Erlang, etc. Trial basis probability distributions for the reconstruction or approximation of evolving Erlang probability density functions may be specified by standard exponential distributions, as the sum of k independent random variables, identically distributed according to an exponential distribution, is the k-Erlang distribution having the same scale parameter as the standard exponential distributions. For annealers, the Erlang distributions need to be evolved as the optimisation progresses, e.g. with each change of the temperature parameter of the annealer. Conventionally, this would require stalling the process of random number generation and subsequent optimization steps during the reprogramming phase of the Erlang distributions. However, in embodiments of the invention, the anneal pattern and corresponding changes of the temperature parameter are part of the scheduling information such that the control unit (e.g. an annealing scheduler) is capable of precomputing and pre-programming sets of basis participating exponential distributions that cover the entire evolution of the Erlang-type target distribution. Accordingly, the HW-RNG in accordance with embodiments of the invention can adapt to the changing Erlang distributions by adding and scaling the primary samples drawn from the programmed exponential distributions as set of primitive probability distributions associated with the sample generation stage. In particular, the sets of p-bit devices do not require reprogramming in this scenario. Coefficients related to the precomputed (de)composition information can be directly stored in the control unit or read from an external memory, making the HW-RNG fully autonomous.

Another exemplary use of the HW-RNG in accordance with embodiments of the invention relates to the transformation of random variables of the form $Y = r(X)$. It is known that the pdf for the transformed random variable, $g(y)$, can be expressed in terms of the pdf of the original random variable, $f(x)$, as $g(y) = f(r^{-1}(y))*|(d/dy) r^{-1}(y)|$ or, noting that $x = r^{-1}(y)$, $g(y) = SUM\{ f(x) |dx/dy|; x \text{ in } r^{-1}(y) \}$. The scalar case can be extended to multivariate target distributions. In HW-RNGs in accordance with embodiments of the invention, the SUM operation is an arithmetic operation that is performed by one of the function logic blocks of the sample processing stage, whereas different ones of the sets of p-bit devices of the sample generation stage can be programmed to represent the primitive probability distributions $f(xi) |dxi/dy|$ of corresponding ones of the pre-images $r^{-1}(y) = \{x1, x2, ...\}$.

The invention may be practiced in many ways and is not limited to the disclosed embodiments. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A hardware random number generator for drawing samples from a target distribution, comprising:

   a sample generation stage adapted to produce a plurality of primary samples from a corresponding plurality of primitive probability distributions, the sample generation stage including:

   sets of programmable p-bit devices, the p-bit device of each set configured to generate individual p-bits according to a statistical mean value,
   a programming unit configured to adjust the statistical mean values associated with each of the sets of p-bit devices to match probability values of a respective one of the plurality of primitive probability distributions,
   a distinct sampling circuit associated with each set of p-bit devices, each sampling circuit configured to choose a p-bit at random among the p-bits generated by the associated set of p-bit devices to produce a respective one of the plurality of primary samples;

   a sample processing stage comprising:

   a plurality of function logic blocks, each configured to perform arithmetic operations on a subset of the plurality of primary samples to obtain an output sample from the target distribution,
   selection circuitry configured to route, based on a select signal, at least one subset of the plurality of primary samples from the sample generation stage to a corresponding at least one function logic block of the plurality of function logic blocks;

   a control unit configured to:

   obtain composition information relating to a composition of basis distributions representative of said target distribution, said composition information identifying at least one arithmetic operation to be performed on random variables defined by said composition of basis distributions,
   select and instruct at least one function logic block of the processing stage to perform the at least arithmetic operation identified by said composition information,
   instruct the programming unit to program, in accordance with each basis distribution identified in the composition information, a corresponding one of the sets of p-bit devices, thus adapting the primitive probability distributions to the basis distributions comprised by the composition of basis distributions,
   generate the select signal to operatively couple the selected at least one function logic block of the sample processing stage to sampling circuits of the sample processing stage that produce primary samples of random variables defined by said composition of basis distributions, thereby identifying subsets of the plurality of primary samples that are input to the selected at least one function logic block.

2. The hardware random number generator of claim 1, further comprising a sample buffer connected between the sample generation stage and the processing stage, the sample buffer being configured to temporarily hold the primary samples produced by the sample generation stage.

3. The hardware random number generator of claim 2, wherein the sample buffer has a buffer capacity to hold the primary samples of a number of cycles as least as large as a latency associated with the programming of one of the sets of p-bit devices.

4. The hardware random number generator of any one of the preceding claims, wherein the sets of p-bit devices, the sampling circuits, the selection circuitry and the function logic blocks are arranged in different stages of a pipeline, thus allowing different stages of the pipeline to perform work with regard to different output samples in parallel.

5. The hardware random number generator of any one of the preceding claims, the target distribution evolving dynamically, wherein the control unit is configured to obtain updates to the composition information with respect to the evolving target distribution, determine modifications to the least one arithmetic operation to be performed on the random variables identified in the updates to the composition information, select and instruct one of the function logic block of the sample processing stage to perform said at least one arithmetic operation taking into account said modifications, and regenerate the select signal if another function logic block of the sample processing stage has been selected as a result of said modification.

6. The hardware random number generator of any one of the preceding claims, the target distribution evolving dynamically, wherein the control unit is configured to obtain updates to the composition information with respect to the evolving target distribution, determine compositional changes with regard to the random variables defined by said composition of basis distributions, select and instruct one of the function logic block of the sample processing stage to perform said at least one arithmetic operation taking into account the changes in the composition of random variables, and regenerate the select signal to operatively couple the selected at least one function logic block of the sample processing stage to sampling circuits of the sample processing stage that produce primary samples of the changed composition of random variables.
The hardware random number generator of any one of the preceding claims, the target distribution evolving dynamically, wherein the control unit is configured to obtain updates to the composition information with respect to the evolving target distribution, identify at least one modified basis distribution in the composition of basis distributions based on the updates to the composition information, and instruct the programming unit to program, in accordance with each modified basis distribution, a corresponding one of the sets of p-bit devices, thus adapting the primitive probability distributions to the modified basis distributions.

7. The hardware random number generator according to any one of claims 5 to 7, wherein the control unit is configured to update the target distribution in accordance with an annealing schedule.

8. The hardware random number generator of any one of the preceding claims, wherein one or more of the function logic blocks of the processing stage comprise digital electronic adders and/or multipliers.

9. The hardware random number generator of any one of the preceding claims, wherein the basis distributions comprise at least one basis distribution selected from the following probability distributions: Binomial, Geometric, Poisson, Normal, Exponential, Erlang, Cauchy, Lévy, Beta, Gamma, Voigt, Chi-square, Rayleigh.

10. The hardware random number generator of any one of the preceding claims, further comprising an output buffer in communication with the processing stage, the output buffer being configured to buffer the output samples.

11. A method of generating samples from a target distribution, comprising the steps:

  - providing an ensemble of basis distributions,
  - providing a plurality of function logic blocks, each configured to perform arithmetic operations on input variables to obtain an output sample from the target distribution,
  - determining a composition of basis distributions selected from the ensemble of trial basis distributions as an approximation or equivalent to the target distribution, said composition of basis distributions identifying at least arithmetic operations to be performed on random variables defined by the composition of basis distributions,
  - for each basis distribution participating in said composition of basis distributions, programming a respective set of programmable p-bit devices, including programming a statistical mean value associated with each p-bit device of the set of p-bit devices to match a corresponding probability value of the basis distribution,

- for each set of p-bit devices programmed in accordance with one of the basis distributions participating in said composition of basis distributions, generating individual p-bits by the respective p-bit devices of the set of p-bit devices and randomly selecting one of individually generated p-bits using a predetermined sampling algorithm, thus obtaining a primary sample from each basis distribution participating in said composition of basis distributions,

- obtaining a subset of the primary samples in accordance with the random variables defined by the composition of basis distributions,

- selecting a function block from the plurality of function logic block in accordance with said composition of basis distributions, configuring the selected function logic block to perform the at least one arithmetic operation, and applying the subset of primary samples as input variables to the function block to produce an output sample from the target distribution.

12. The method of claim 11, further comprising the steps of:

- detecting changes in the target distribution,

- determining modifications to the composition of basis distributions to compensate the changes in the target distribution,

- reconfiguring the selected function logic block to perform at least one modified arithmetic operation if the modifications to the composition of basis distributions pertains to a modification of the at least one arithmetic operation,

- modifying the subset of the primary samples operation if the modifications to the composition of basis distributions pertains to a modification of the random variables defined by the composition of basis distributions.

13. The method of claim 12, further comprising:

- reprogramming one of the sets of p-bit devices in accordance with a modified basis distribution if the modifications to the composition of basis distributions pertains to a modification of the basis distribution participating in the composition of basis distributions.

FIG. 1

FIG. 2

FIG. 3

FIG. 4

FIG. 5

FIG. 6

Europäisches
Patentamt

European
Patent Office

Office européen
des brevets

# EUROPEAN SEARCH REPORT

**Application Number**

EP 24 22 2030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/200771 A1 (IMPERIAL COLLEGE INNOVATIONS LTD [GB]) 3 October 2024 (2024-10-03) | 1,4-13 | INV. G06F7/58 |
| A | * page 9 - page 20; figure 6 * ----- | 2,3 | |
| A | US 2022/044719 A1 (LI HAI [US] ET AL) 10 February 2022 (2022-02-10) * paragraph [0065] - paragraph [0074]; figure 7 * ----- | 1-13 | |
| A | US 2023/070486 A1 (DEBASHIS PUNYASHLOKA [US] ET AL) 9 March 2023 (2023-03-09) * paragraph [0053] - paragraph [0075]; figure 8 * ----- | 1-13 | |

**TECHNICAL FIELDS SEARCHED (IPC)**

G06F

The present search report has been drawn up for all claims

| Place of search | Date of completion of the search | Examiner |
|---|---|---|
| Munich | 3 June 2025 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 2030

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | Publication date | Patent family member(s) | | Publication date |
|---|---|---|---|---|
| WO 2024200771 A1 | 03-10-2024 | GB | 2628655 A | 02-10-2024 |
| | | WO | 2024200771 A1 | 03-10-2024 |
| US 2022044719 A1 | 10-02-2022 | CN | 116029335 A | 28-04-2023 |
| | | DE | 102022119708 A1 | 27-04-2023 |
| | | US | 2022044719 A1 | 10-02-2022 |
| US 2023070486 A1 | 09-03-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23216348 A

- EP 23216705 A

**Non-patent literature cited in the description**

- **P. DEBASHIS et al.** Gaussian Random Number Generator With Reconfigurable Mean and Variance Using Stochastic Magnetic Tunnel Junctions. *IEEE Magnetics Letters*, 2022, vol. 13, 1-5